# EUROPEAN PATENT APPLICATION

(11) **EP 4 365 406 A1**
(43) Date of publication of application: **08.05.2024**
(21) Application number: 22205776.2
(22) Date of filing: 07.11.2022
(51) Int. Cl.: E21D 9/00, G01S 7/481, G01S 17/88

(54) **A COVER ARRANGEMENT FOR A SENSOR DEVICE OF A MOBILE MINING MACHINE AND A MOBILE MINING MACHINE**

(71) Applicant: Sandvik Mining and Construction Oy, 33330 Tampere (FI)
(72) Inventor: AALTO, Tommi, 33311 Tampere (FI)
(74) Representative: Sandvik

(57) **Abstract**

A cover arrangement for a sensor device of a mobile mining machine, the sensor device being a type of sending light beams (B) and receiving reflections of light beams, the cover arrangement (1) comprising a cover wall (2) and at least one support (3) for supporting the cover wall, the support being arranged between a support surface (4) and the cover wall (2), wherein a space (6) for the sensor device (7) is provided between the support surface (4) and the cover wall (2). The at least one support (3) is arranged in an alignment with direction of at least part of light beams (B) generated by the sensor device (7) in an operational state.

## Description

### FIELD OF THE INVENTION

The invention relates to a cover arrangement for a sensor device of a mobile mining machine.

Further, the invention relates also to a mobile mining machine.

### BACKGROUND OF THE INVENTION

Modern mobile underground mining machines are often provided with sensor devices for detecting environment. Such sensor devices may be easily damaged in rough environments, such in mines, in which mining devices may be subjected to external forces, such as hits of falling objects, rocks, grit etc.

General working principles of many sensor devices are based on beams, such as light beams, targeting an object or a surface and measuring the time reflected (light) beam to return to the receiver of the sensor.

One such sensor device is a light detection and ranging sensor (Lidar). Lidar uses active sensors that supply their own illumination source. The energy source in form of light beams hits an object or a surface, and the reflected energy is detected and measured by a sensor. Distance to the object is determined by recording the time between transmitted and backscattered pulses and by using the speed of light to calculate the distance traveled.

In mining machines sensor devices may need an extra cover against external forces.

### OBJECTIVE OF THE INVENTION

An objective of the invention is to provide a novel cover arrangement for a sensor device of a mobile mining machine.

Another further objective is to provide a novel mobile mining machine provided with a sensor device.

### SUMMARY

According to a first aspect, there is provided a cover arrangement for a sensor device of a mobile mining machine, the sensor device being a type of sending light beams and receiving reflections of light beams, the cover arrangement comprising a cover wall and at least one support for supporting the cover wall, the support being arranged between a support surface and the cover wall, wherein a space for the sensor device is provided between the support surface and the cover wall.

According to an embodiment the at least one support is arranged in an alignment with direction of at least part of light beams generated by the sensor device in an operational state.

The technical effect of one or more embodiments is that the support of the cover arrangement the number of blocked light beams of the sensor device is reduced or a sector of blocked light beams is more narrow due to the positioning of the support in an alignment of light beam, wherein the sensing sector of the sensor device can be kept large and at the same time the protection efficiency of the cover arrangement may be kept high. The direction of support allows a use of robust components in producing a firm and robust cover arrangement for a sensor device of a mobile mining machine. Supports arranged in a direction of some of the beams block a minimal number of beams transmitted and received by the sensor device. An advantage of the cover arrangement according to one or more embodiments of the present disclosure is a less limited field of view of sensor devices to certain directions, for example, the cover arrangement limits the field of view of sensor devices less than a cover for a lidar. The cover arrangement enabling a less limited field of view is also an advantage when using the cover arrangement with sensor devices having a wide sensing area. Such sensor devices may be used for example in autonomous vehicles, such as in autonomous mining machines.

The cover arrangement for a sensor device is characterized by what is stated in the independent claim.

Some other embodiments are characterized by what is stated in the other claims.

Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit subtasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In an embodiment of the cover arrangement the cover arrangement may comprise a plurality of supports. An advantage of plurality of supports is that a support effect of several supports is better and support forces may be divided on a larger area. Further advantage is that several supports may protect the sensor device in a lateral direction.

In an embodiment of the cover arrangement the at least one support may be arranged in a direction of a light beam generated by the sensor device. An advantage of the at least one support being arranged in a direction of a light beam is that the support may block the light beams emitted by the sensor device only in a very narrow sector due to the positioning the support in a direction of the light beam.

In an embodiment of the cover arrangement the cover arrangement may comprise a plurality of supports arranged at a distance from each other in a direction of a light beam and/or in a cross direction of a light beam. An advantage of a plurality of supports being arranged at a distance from each other in a direction of a light beam and/or in a cross direction of a light beam is that a support effect of several supports is better and support forces may be divided on a larger area. Further advantage is that several supports may protect the sensor device in a lateral direction. A further advantage may be that the individual supports may be made to differ from each other, and their shape or other physical characteristics may be adapted according to an application.

In an embodiment of the cover arrangement at least two of the supports may be arranged on a circumference around the sensor device and at a distance from the sensor device and directed towards a centre of the circumference in a radial direction, for example towards a centre of a circle. An advantage of this is that this generally provides suitable support to the cover wall. By directing supports towards a centre of the circumference in a radial direction generally approximates the positions of the supports so that they are approximately arranged in the direction of light beams provided by the sensor. This may generally simplify and speed up the production of the cover arrangement.

In an embodiment of the cover arrangement for the sensor device the sensor device may be a light detection and ranging sensor (Lidar). An advantage of this is that the sensor type being a Lidar, an especially suitable combination of the cover arrangement and the sensor type for use with the cover arrangement according to the present application is achieved.

In an embodiment of the cover arrangement the at least one support may be a plate like element, with a first side wall and a second side wall, a first end such as a front end may be arranged facing in a direction towards the sensor device, and a second end such as a back end may be facing in a direction away from the sensor device. An advantage of this is that the plate like support is easy to manufacture and may be made to withstand forces of extreme use environments, such as mines.

In an embodiment of the cover arrangement a centre axis of the support in the horizontal plane may be positioned and directed towards an emitting point of beams of the sensor device. An advantage of directing the centre axis/centre plane of the support towards an emitting point is that the support is positioned in the cover support arrangement so that a blockage of beams emitted by the sensor device is minimized.

In an embodiment of the cover arrangement the at least one support may comprise a wedge like cross-section in a horizontal plane, wherein cross section may be tapering from the second end such as the back end towards the first end such as the front end of the support. An advantage of this may be to minimize blocking the beams by a wedge shape of the support.

In an embodiment of the cover arrangement the cover wall may be a plate like element, with an upper wall and a lower wall and a side wall connecting the upper wall to the lower wall. An advantage of this is that by using a plate like cover wall an easiness to make different shapes is achieved and at the same time covering and protection efficiency may be kept high.

In an embodiment of the cover arrangement the cover wall may comprise at least one of the following: a circular shape, an annular shape, a rectangular shape, an oval shape, a polygonal shape, a semi-circular shape, a semi-oval shape, or a combination of two or more of these. An advantage of this is that plurality of different shapes for the cover wall are possible and easy to achieve.

In an embodiment of the cover arrangement the cover wall may be arranged to cover and/or protect of an area of the sensor device at least in the horizontal plane. An advantage is that it may be enough to protect the sensor device mainly in the horizontal plane, i.e., against external forces from above. This is efficient and generally enables large detecting sector(s) for the sensor device.

In an embodiment of the cover arrangement the cover wall may be extending a distance away from the sensor device in a horizontal plane. An advantage of this is that this brings an overhang of the cover wall with respect to the sensor device, and this gives enhanced protection for the sensor device.

According to a second aspect, there is provided a mobile mining machine comprising at least one sensor device. According to an embodiment, the mobile mining machine may be provided with a cover arrangement for the sensor device according to any one of embodiments mentioned above alone or combined with any other above embodiment or embodiments.

In an embodiment of the mobile mining machine the mobile mining machine may be an autonomously controlled mining machine.

### BRIEF DESCRIPTION OF THE DRAWINGS

The accompanying drawings, which are included to provide a further understanding of the embodiments and constitute a part of this specification together with the description help to explain the principles of the invention set out in the claims. In the drawings:
**Figure 1** is a simplified side view of an example mobile mining machine with a sensor device,
**Figure 2** is a simplified side view of an example embodiment of the cover arrangement with one support for a sensor device,
**Figure 3** is a simplified side view of an example embodiment of the cover arrangement for a sensor device comprising a plurality of supports,
**Figure 4** is a simplified top view of an example embodiment of the cover arrangement for a sensor device comprising a plurality of supports,
**Figure 5** is a simplified top view of an example embodiment of the cover arrangement for a sensor device,
**Figure 6** is a simplified top view of an example embodiment of the cover arrangement for a sensor device,
**Figure 7** is a simplified top view of an example embodiment of the cover arrangement for a sensor device, and
**Figure 8** is a simplified top view of an example embodiment of the cover arrangement for a sensor device.

In the figures, some embodiments are shown simplified for the sake of clarity. Similar parts are marked with the same reference numbers in the figures.

### DETAILED DESCRIPTION

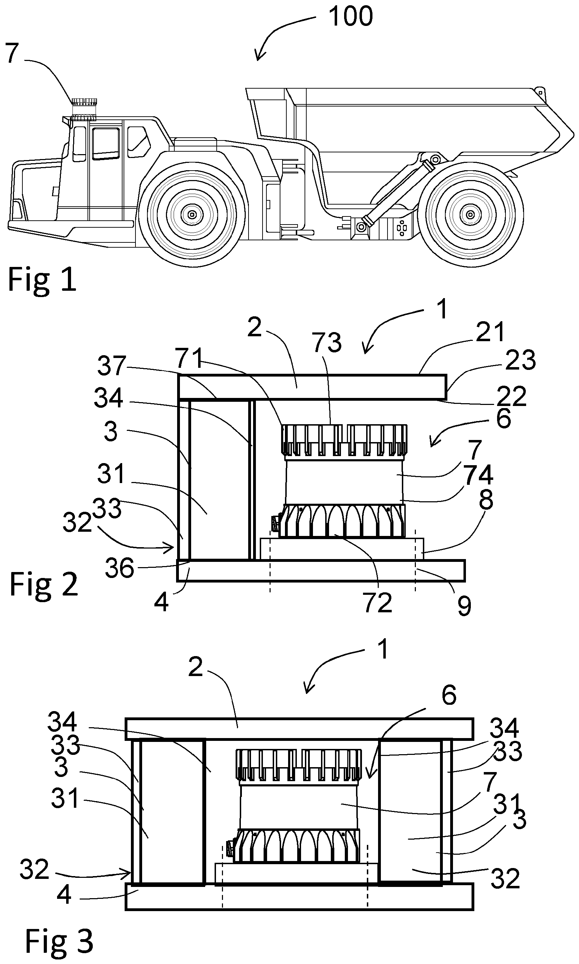

According to an aspect, a cover arrangement for a sensor device described in this description may be arranged in a mobile mining machine. The machine may be a mine machine, or a construction machine, e.g., a rock drilling rig, a development drill, a tunneling drilling machine, a surface drilling machine, a bolting or reinforcing vehicle, a rock removal machine, a longhole drill rig, an explosive charging machine, a loader, a transport vehicle, a loading or hauling machine, a setting vehicle of gallery arcs or nets, a concrete spraying machine, a crusher, or a measuring vehicle. Figure 1 shows one example of a mobile mining machine 100. The mobile mining machine 100 may be a mining vehicle. In an embodiment of the mining machine 100 a sensor device 7 may be arranged on the mining machine. The sensor device 7 may be connected to any suitable position within the mining machine 100. In an embodiment of the figure 1 the sensor device 7 is arranged on a top of the cabin. In an embodiment the sensor device may be configured to detect an environment and objects near the mining machine.

In figure 1 the sensor device 7 is for simplicity presented without a cover arrangement for a sensor device.

Figure 2 illustrates a schematical side view of an embodiment of the cover arrangement 1 for a sensor device 7. The cover arrangement 1 may comprise a cover wall 2. The cover arrangement 1 may further comprise at least one support 3. The at least one support 3 may be arranged between a support surface 4 and the cover wall 2. In an embodiment the at least one support 3 may be connected to the support surface 4 and/or to the cover wall 2. The at least one support 3 may be arranged to support the cover wall 2, so that a space 6 for the sensor device 7 may be provided between the support surface 4, the cover wall 2 and the at least one support 3. In an embodiment of the cover arrangement for a sensor device a sensor device 7 may be arranged into a space 6 for the sensor device 7. In an embodiment the sensor device 7 may comprise its own casing and the cover arrangement 1 for a sensor device is an additional cover arrangement for giving extra protection to the sensor device 7. In an embodiment the sensor device 7 may be connected to the support surface 4. In an embodiment the sensor device 7 may be connected to the support surface 4 directly and/or by a connecting element 8. In an embodiment the sensor device 7 and/or the connecting element may be connected to the support surface 4 via fastening devices 9, for example with nuts and bolts. In another embodiment the sensor device 7 and or the connecting element 8 may be connected to the support surface by welding or gluing. In an embodiment the sensor device 7 may have a casing 71 that has a first end such as a bottom end 72, a second end such as an upper end 73 and generally cylindrical side wall 74 that connects the first end and the second end such as the bottom end 72 and the upper end 73. In an embodiment the casing of the sensor device may made to comprise other shapes, for example, oval, rectangular, cubic, semicylindrical, semioval, etc. depending on the application and the sensor type. The sensor device 7 may be of a type that emits radiation such as light. In an embodiment the sensor device may comprise a source of light. In an embodiment the source of light may be a laser. In an embodiment on a sensor device 7 may comprise a light detection and ranging sensor (Lidar). In an embodiment the sensor device 7 may emit radiation through a side wall 74 of the casing 71. In an embodiment the sensor device emits light beams. In an embodiment the sensor device 7 may be in an operational state able to emit beams, such as light beams, especially light beams of coherent light, through the side wall 74 of the sensor device casing. In an embodiment the sensor device 7 may be able to emit light beams and/or receive reflections in a horizontal plane substantially in all directions, from example, from an emitting point in at least one sector of 360 degrees or several sectors so that they may cover together a sector of 360 degrees in a horizontal plane. In an embodiment it may be possible that the sector the sensor device 7 is able to cover (e.g. emit light beams) is smaller than 360 degrees. In an embodiment the sector the sensor device is able to emit light beams or receive reflections is at least 270 degrees. In a vertical plane the sensor device 7 may be able to emit beams in an angle of about 60 to 90 degrees. This means that especially in the horizontal plane the support wall 3 may be arranged to a position relative to the sensor device 7 so that blockage of beams emitted from or receiving by the sensor device is minimized. This may be achieved by arranging the at least one support 3 in an alignment with direction of beams B generated by the sensor device 7 in an operational state. In an embodiment the at least one support 3 may be arranged in an alignment with, for example, in line with the direction of one or more beams B generated by the sensor device 7 in an operational state. In an embodiment a side wall or a centre axis 35 of the at least one support 3 in a horizontal plane may be arranged in an alignment with, for example, in line with the direction of one or more beams B generated by the sensor device 7 in an operational state. In an embodiment this may be achieved by arranging the at least one support 3 in a sector in a horizontal plane that is narrow compared to a sector the sensor is able to emit light beams (max 360 degrees in the horizontal plane). In an embodiment the at least one support 3 may be a plate like structure with a first side wall 31 and a second side wall 32, a first end such as a front end 34 arranged facing in a direction towards the sensor device 7, and a second end such as a back end 33 facing in a direction away from the sensor device. The support may also comprise a lower end 36 and an upper end 37. The upper end 37 of the support 3 may be connected to the cover wall 2. The lower end 36 of the support 3 may be connected to a support surface 4. In an embodiment a vertical plane of the support 3 is arranged in an alignment with direction of beams generated by the sensor device 7 at least in one direction in a horizontal plane. In an embodiment the horizontal plane and the vertical plane may be relative planes in relation to a support surface of a sensor device.

In figure 2 is a simplified side view of an embodiment with one support 3.

Figure 3 illustrates simplified and schematically a side view of an embodiment of the cover arrangement 1 for a sensor device comprising a plurality of supports 3. In an embodiment the cover arrangement 1 for a sensor device 7 may comprise, for example, two supports 3. Each of the supports 3 may be arranged between the support surface 4 and the cover wall 2 arranged at a distance from the support surface 4. In the figure 3 the cover wall is arranged at a distance upwards from the support surface 4. In an embodiment the support 3 may be a structure with a first side wall 31 and a second side wall 32, a front end 34 arranged facing in a direction towards the sensor device 7, and a back end 33 facing in a direction away from the sensor device. The support 3 may also comprise a lower end 36 and an upper end 37. The upper end 37 of the support 3 may be connected to the cover wall 2. The lower end 36 of the support 3 may be connected to a support surface 4. In an embodiment the support may be a plate like structure. In an embodiment the support may be comprise metal, composite material, polymer material, plastic, or a combination of any two or more of these. In an embodiment the support may be made of steel. In an embodiment the cover wall 2 may comprise metal, composite material, polymer material, plastic, or a combination of any two or more of these. In an embodiment the cover wall may be made of steel. In an embodiment the cover wall may be connected with the support 3 by welding or by fastening devices. In an embodiment at least a part of the cover arrangement for a sensor device may be produced by additive manufacturing.

In an embodiment the support 3 may comprise a bar or a rod. In an embodiment the support may comprise a plurality of bars or rods arranged side by side. In an embodiment the cover arrangement 1 may comprise a plurality of supports 3 arranged in a direction of (light) beam B and/or in a cross direction of the beam B. In an embodiment the cover arrangement may comprise a plurality of supports 3 arranged in a direction of light beams generated by the sensor device 7 in an operational state. In an embodiment a side wall or a centre axis each of a plurality of supports 3 in a horizontal plane may be arranged in an alignment with, for example, in line with the direction of one or more beams B generated by the sensor device 7 in an operational state. In an embodiment a support 3 may be arranged in a cross direction of the beam B generated by the sensor device 7 in an operational state. In an embodiment a cross direction may have a meaning that the support 3 or a side wall of the support may be arranged at an angle to a beam B generated by the sensor device in an operational state. This may mean that the support 3 arranged in a cross direction of the beam(s) B generated by the sensor device may limit a wider sector of beams generated by the sensor device in an operational state. In an embodiment the support arranged in a cross direction of the direction of one or more beams B generated by the sensor device may mean that the support may limit the field of view of the sensor device more than when the support is arranged in line with the direction of one or more beams B.

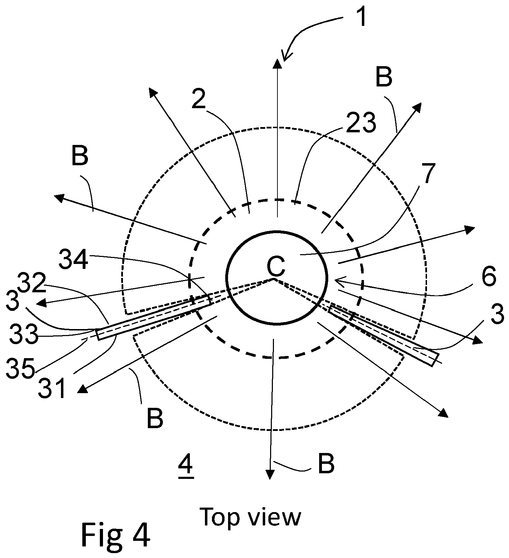

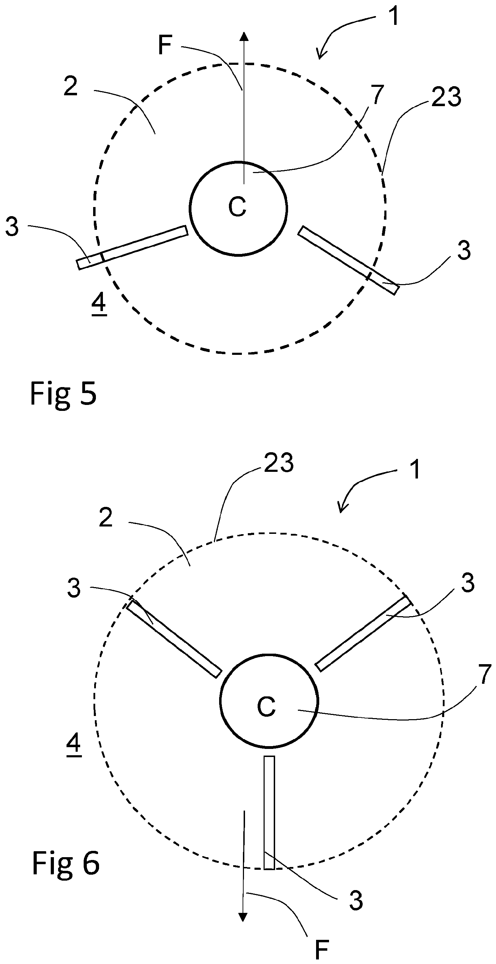

Figure 4 illustrates simplified and schematically a top view of an embodiment of the cover arrangement 1 for a sensor device 7 comprising a plurality of supports 3. The top wall 2 of the cover arrangement is presented with a dashed line. An emitting point of beams B emitted by the sensor device 7 in the operational state is presented with reference sign C. Outer dashed lines show an example of sectors of directions the sensor device 7 may be capable to generate and transmit beams B with an embodiment of the cover arrangement having two supports 3. In an embodiment the cover arrangement 1 for a sensor device 7 may comprise a plurality of supports 3. In an embodiment the support 3 may be a plate like structure with a first side wall 31 and a second side wall 32, a front end 34 arranged facing in a direction towards the sensor device 7, and a back end 33 facing in a direction away from the sensor device. In an embodiment a vertical plane of the support 3 is arranged in an alignment with direction of beams generated by the sensor device 7 at least in one direction in a horizontal plane. In an embodiment the support 3 may be positioned so that its front end 34 is facing towards emitting point C of beams of the sensor device 7. In an embodiment the emitting point C may be in the centre of the sensor device 7 in the horizontal plane. A centre axis 35 of the support 3 in the horizontal plane may be positioned and directed towards the emitting point C of beams B being emitted by the sensor device 7. In an embodiment the support 3 may have rectangular cross section in a horizontal plane. In an embodiment the support may have a wedge like cross-section in a horizontal plane. A cross section of the support 3 may taper from the back end 33 towards the front end 34 of the support 3. In figure 5 the cover arrangement 1 may comprise two supports 3. In an embodiment of the cover arrangement 1 the support surface 4 may be connected to a surface of a mining machine or may be a surface of a mining machine. In an embodiment a larger sector between a first and second support in a horizontal plane may be arranged facing in a main moving direction and/or a forward direction F of the mining machine.

In figure 6 the cover arrangement 1 may comprise three supports 3. In an embodiment supports 3 may be arranged on a circumference around the sensor device 7. In an embodiment the supports 3 may be arranged dividedly on a circle around the sensor device 7. In an embodiment supports may be arranged evenly divided on a circle around the sensor device. In an embodiment evenly divided may mean that an angle between each two adjacent supports is about 120 degrees in case of three supports arranged evenly on a circumference around the sensor device in a horizontal plane. In an example embodiment three supports may be arranged unevenly on a circumference around the sensor, wherein angles between each two adjacent supports in a horizontal plane may vary. The sensor device 7 and the cover arrangement 1 may be arranged relative to each other according to needs of an application. In an embodiment a main moving direction or forward direction F may be other that presented in the figure 6.

In an embodiment the cover wall 2 may be a plate like element, with an upper wall 21 and a lower wall 22 and a side wall 23 connecting the upper wall to the lower wall.

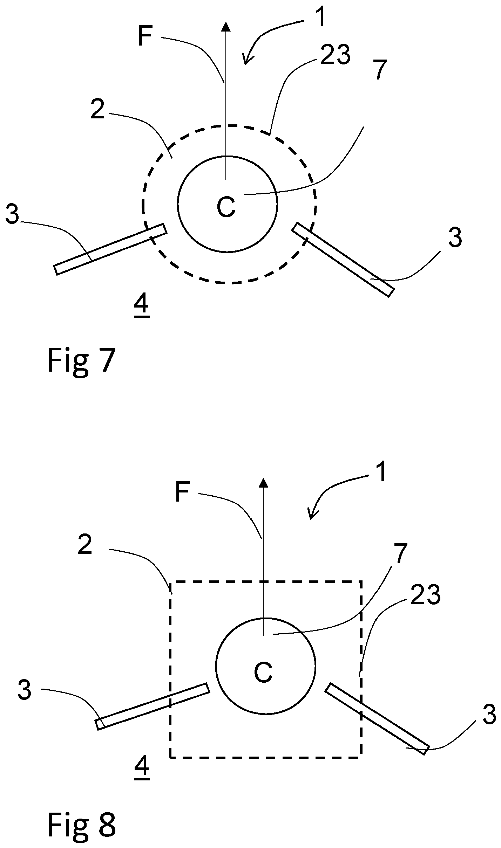

In an embodiment a cover wall 2 may comprise at least one of the following: a circular shape, an annular shape, a rectangular shape, an oval shape, a polygonal shape, a semi-circular shape, a semi-oval shape, or a combination of two or more of these. Figures 7 and 8 illustrate some examples of shapes of cover walls 2 (in dashed lines). In figure 7 the cover wall 2 may comprise a circular shape. In an exemplary embodiment of figure 7 a size of the cover wall 2 may be small in relation to supports 3. In an embodiment the cover wall 2 may extend on the support 3. In an embodiment the cover wall 2 may extend only partly on the support 3. In an embodiment the support 3 may extend a distance from the side wall of the cover wall 2 in a horizontal plane. In an embodiment the cover wall 2 may be arranged coaxially with the sensor device 7 in a horizontal plane. In an embodiment a larger sector between a first and second support 3 in a horizontal plane may be arranged facing in a main moving direction and/or a forward direction F of the mining machine. In figure 8 the cover wall 2 may comprise a rectangular shape. In an embodiment the cover wall may comprise a square shape in a horizontal plane. In an exemplary embodiment of figure 8 a size of the cover wall 2 may be small in relation to supports 3. In an embodiment the cover wall 2 may extend on the support 3. In an embodiment the cover wall 2 may extend only partly on the support 3. In an embodiment the support 3 may extend a distance from the side wall of the cover wall 2 in a horizontal plane. In an embodiment the cover wall 2 may be arranged centered with the sensor device 7 in a horizontal plane. In an embodiment a larger sector between a first and second support in a horizontal plane may be arranged facing in a main moving direction and/or a forward direction F of the mining machine.

The cover wall 2 may be arranged to cover and/or protect an area of the sensor device 7 at least in the horizontal plane. In an embodiment the cover wall 2 may extend a distance away from the sensor device 7 in a horizontal plane.

In an embodiment of a mobile mining machine 100 may comprise at least one sensor device 7. The mobile mining machine may be provided with a cover arrangement 1 for the sensor device 7.

In an embodiment the mobile mining machine 100 may be an autonomously controlled mining machine. In an embodiment the mobile mining machine 100 may be an underground mining machine.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A cover arrangement for a sensor device of a mobile mining machine, the sensor device being a type of sending light beams (B) and receiving reflections of light beams, the cover arrangement (1) comprising a cover wall (2) and at least one support (3) for supporting the cover wall, the support being arranged between a support surface (4) and the cover wall (2), wherein a space (6) for the sensor device (7) is provided between the support surface (4) and the cover wall (2), wherein the at least one support (3) is arranged in an alignment with direction of at least part of light beams (B) generated by the sensor device (7) in an operational state.

2. The cover arrangement according to claim 1, wherein the cover arrangement comprises a plurality of supports (3).

3. The cover arrangement according to claim 1 or 2, wherein the at least one support (3) is arranged in a direction of a light beam (B) generated by the sensor device (7).

4. The cover arrangement according to any one of claims 1 to 3, wherein the cover arrangement (1) comprises a plurality of supports (3) arranged at a distance from each other in a direction of a light beam (B) and/or in a cross direction of a light beam (B).

5. The cover arrangement according to any one of claims 1 to 4, wherein at least two of the supports (3) are arranged on a circumference around of the sensor device (7) and at a distance from the sensor device (7) and directed towards a centre of the circumference in a radial direction, for example towards a centre of a circle.

6. The cover arrangement according to any one of claims 1 to 5, wherein the sensor device (7) is a light detection and ranging sensor.

7. The cover arrangement according to any one of claims 1 to 6, wherein the at least one support (3) is a plate like element, with a first side wall (31) and a second side wall (32), a front end (33) arranged facing in a direction towards the sensor device (7), and a back end (34) facing in a direction away from the sensor device.

8. The cover arrangement according to any one of claims 1 to 7, wherein a centre axis (35) of the support (3) in the horizontal plane is positioned and directed towards an emitting point (C) of beams (B) of the sensor device (7).

9. The cover arrangement according to any one of claims 1 to 8, wherein the at least one support (3) comprises a wedge like cross-section in a horizontal plane, wherein cross section is tapering from the back end (34) towards the front end (33) of the support (3).

10. The cover arrangement according to any one of claims 1 to 9, wherein the cover wall (2) is a plate like element, with an upper wall and a lower wall and a side wall connecting the upper wall to the lower wall.

11. The cover arrangement according to any one of claims 1 to 10, wherein the cover wall (2) comprises at least one of the following: a circular shape, an annular shape, a rectangular shape, an oval shape, a polygonal shape, a semi-circular shape, a semi-oval shape, or a combination of two or more of these.

12. The cover arrangement according to any one of claims 1 to 11, wherein the cover wall (2) is arranged to cover and/or protect an area of the sensor device (7) at least in the horizontal plane.

13. The cover arrangement according to any one of claims 1 to 12, wherein the cover wall (2) is extending a distance away from the sensor device (7) in a horizontal plane.

14. A mobile mining machine comprising at least one sensor device, wherein the mobile mining machine (100) is provided with a cover arrangement (1) for the sensor device (7) according to any one of claims 1 to 13.

15. A mobile mining machine according to claim 14, wherein the mobile mining machine (100) is an autonomously controlled mining machine.
